# EUROPEAN PATENT SPECIFICATION

(11) **EP 4 464 573 B1**
(45) Date of publication and mention of the grant of the patent: **07.05.2025**
(21) Application number: 23173434.4
(22) Date of filing: 15.05.2023
(51) Int. Cl.: B62B 7/04

(54) **CHILD CARRIER**
KINDERTRAGEVORRICHTUNG
PORTE-BÉBÉ

(43) Date of publication of application: 20.11.2024
(73) Proprietor: Thule Sweden AB, 335 04 Hillerstorp (SE)
(72) Inventor: STARK, Urban, 56731 Vaggaryd (SE); UTTERHEIM, Linnea, Vaggeryd (SE); MANLY, Jessica, Vaggeryd (SE); PETTERSSON, Jens, 55330 Jönköping (SE); ENGDAHL, Gustav, Jönköping (SE); DOBERAUER, Andreas, Värnamo (SE); PARK, Viktor, 331 54 Värnamo (SE)
(74) Representative: Wallentin, Lars

(56) References cited:
- CN-A- 114 620 109
- CN-A- 115 583 278
- DE-U1- 20 109 129
- DE-U1- 20 308 673
- US-A- 5 215 324
- US-A- 6 089 675

## Description

### TECHNICAL FIELD

The present invention relates to a child carrier.

### PRIOR ART

Child carriers can be used to comfortably transport infants and little children. For example, a young child can be seated in the child carrier. A caretaker can than push or pull the child carrier to comfortably move with the child. A child carrier may also be suitable for jogging. When jogging, the caretaker will push the child carrier at elevated speeds in front of them. Some child carriers can also be adjusted to be pulled by a bike, thus being moved with an even higher speed.

A child carrier needs to be intuitive and easy to use to truly simplify life with children. When not in use, for transport with a car or even basic maintenance, easy disassembly of the child carrier is helpful. Hence, a wheel of the child carrier should be easy to mount and dismount while also being securely attached to the rest of the child carrier when in use.

With the above in mind, a front wheel of a child carrier is commonly attached with a lever-tensioned axle to open dropouts of a fork. To ensure safe attachment of the front wheel and reduce risk of unwanted wheel detachment, the dropouts usually comprise inward facing protrusion for additionally retaining the front wheel to the rest of the child carrier and reduce attachment dependency on axle tensioning. However, a wrongly tensioned axle may still result in unintentional front wheel detachment. Further, the wheel may be slightly tilted when the axle is tensioned, resulting in a reduced track accuracy. Especially at high speeds, low track accuracy may make controlling the child carrier difficult.

### SUMMARY OF THE INVENTION

The invention relates to a child carrier. The child carrier may comprise several wheels to allow the stroller to roll over the ground. The child carrier may comprise a suspension. The child carrier may comprise one front wheel and several back wheels, such as two back wheels. In another configuration the child carrier comprises two front wheels. The child carrier may comprise a receptacle for an infant or small child, such as a child seat or bed. The child carrier may comprise a grip for pushing and pulling the child carrier. The child carrier may be configured for use by a jogger and/or for being pulled by a bicycle. The child carrier may comprise a frame, for example connecting the child seat to the wheels and the grip. The frame may form a front fork to which the front wheel is attached.

The child carrier comprises a front wheel attachment device. The front wheel attachment device may be configured for attachment of the front wheel to the rest of the child carrier. For example, the front wheel attachment device may allow removable fixation of the front wheel to the frame of the child carrier. The front wheel may be attached with only one degree of freedom, for example an axis of rotation around an axle. The front wheel may not be steerable. Instead, steering of the child carrier may be achieved by different speeds of left and right back wheels.

The front wheel attachment device comprises a fork with closed dropouts and an axle configured for attaching a front wheel to the fork. A fork may comprise two shafts between which a wheel may be attached. The axle may extend from one shaft to the other shaft of the fork. The shafts may extend parallel to each other at a wheel facing end. Each shaft may have a corresponding dropout. The dropout may form a lower and/or wheel facing end of each shaft. The dropouts are configured for receiving the axle and/or supporting the wheel. A closed dropout may comprise a through hole or blind hole that is configured to receive an end of the axle. A closed dropout may be free of a slit or other opening that is not occupied by the axle attached thereto. By comparison, an open dropout may comprise such a slit or opening that is not occupied by the axle mounted to the fork but is rather only used for mounting and unmounting the axle. For example, unlike an open dropout, the axle may not be inserted into a closed dropout transversal to a longitudinal extension of the axle. For example, the axle may only be inserted in a closed dropout along its axial direction. The dropout may have a receptacle for a hub of the front wheel so that the front wheel may support the child carrier in standing upright even with the axle detached. This may facilitate front wheel attachment and detachment. The closed dropout will prevent the axle from falling out of the dropout even if the axle loses tension or has not been tensioned properly. A risk of unwanted front wheel detachment due to improper axle mounting is thus reduced. The axle may be configured as a shaft. The axle may be formed as a substantially cylindrical part. The axle may be configured for insertion into the hub of the front wheel. The axle may be a metallic part, for example as a solid metallic part. The fork may also be a metallic part, for example formed from several hollow profile pieces. The axle is at least inserted through one or both of the dropouts when properly mounted to the child carrier. The axle may extend through at least one of the dropouts when mounted to the child carrier.

The front wheel attachment device further comprises a wheel tilt adjustment device configured for adjusting a tilt angle of the front wheel relative to the fork. The wheel tilt adjustment device may allow tuning the track accuracy of the child carrier. For example, depending on tensioning of the axle and/or deformation of the fork and/or front wheel over time, the front wheel may not be aligned for the child carrier rolling properly in a straight line without steering being required. Such a behavior may be uncomfortable for the user, for example requiring permanent steering. The wheel tilt adjustment device may allow the user to readjust the wheel orientation relative to the fork to compensate. For example, the wheel tilt adjustment device may provide means for raising or lowering a position of one end of the axle in one shaft of the fork. For example, the wheel tilt adjustment device may allow adjusting a position of at least one of the closed dropouts relative to other parts of the child carrier, such as adjacent frame parts. For example, the wheel tilt adjustment device may allow angle adjustment of the front wheel and/or the axle. The wheel tilt adjustment device may be arranged partially or completely inside one of the shafts of the fork or outside of the shaft of the fork.

According to an embodiment of the child carrier, the wheel tilt adjustment device is configured for adjusting the tilt angle of the front wheel around a forward-backward axis of the child carrier and/or by adjusting an alignment of the axle relative to the fork. The forward-backward axis of the child carrier may correspond to a straight driving direction of the child carrier. When adjusting the angle, the front wheel may thus be tilted left or right. Additionally or alternatively, the wheel tilt adjustment device is configured for adjusting the tilt angle of the front wheel around an upright axis of the child carrier. The upright axis may correspond to a vertical axis when the child carrier is standing on flat ground. The tilt angle adjustment may thus turn the front wheel towards left or right. An alignment of the axle relative to the fork may correspond to an orientation of the axial axis of the axle relative to the front fork.

According to an embodiment of the child carrier, a first end of the axle is extending through a first of the dropouts. The first dropout may comprise a through hole. For attaching the axle, the axle may be inserted with a second end first through the first dropout. The second end of the axle may be attached to the fork with a counter-element. The counter-element may prevent the second end from being removed from the fork, for example by slipping out of the second dropout. The counter-element may thus prevent the axle from slipping out of the dropouts again. The second end of the axle may be removably fixed to the second dropout, for example by means of the counter-element. The counter-element may be arranged next to the second dropout, within the second dropout or may form the second dropout. The counter-element may be configured for positive locking and/or frictional locking with the second end of the axle. For example, the counter-element may be configured as a nut with an internal thread. For example, the second end of the axle may be threadedly attached to the counter element. Alternatively, the second end of the axle may be attached directly to the fork, in particular one of its shafts. When the axle is tightened to the fork, the axle may pull the two shafts of the fork together. The axle may comprise an additional tensioner, such as a quick spanning mechanism. The axle may comprise a handle or a receptacle for a tool for screwing the axle into the fork and/or counter-element. The counter-element may be threaded on or into to the axle. The counter element may comprise a through hole or blind hole with an internal thread configured to engage an external thread of the axle. The counter-element may be a metallic part. The counter element may alternatively also comprise an external thread and the second end of the second axle may comprise a hole with an internal thread.

According to an embodiment of the child carrier, the counter-element is at least partially arranged within the fork. For example, the counter-element may be fully arranged within the second shaft of the fork. The counter-element may be floatingly received in the fork but may be secured against accidental loss and/or may be fixed in place at least after adjusting the wheel tilt angle. Interior arrangement of the counter-element in the fork may prevent loss of the counter-element, damaging the counter-element by bumping into obstacles and provide a smoother exterior.

Alternatively, the counter-element may be arranged on an exterior side of the fork, in particular completely on the exterior side. The exterior side may be a side of the second shaft of the fork. For example, the exterior side can be a side opposite the front wheel and/or facing away from the first shaft of the fork. The counter-element may be thus easily accessible, for example for maintenance. Moreover, a range of tilt adjustment may be particularly large.

According to an embodiment of the child carrier, the wheel tilt adjustment device is configured to allow movement of the counter-element along the fork. For example, the counter-element may be moveable along an end section of the fork forming the second dropout or an end section adjacent the second dropout. The counter-element may be configured as a floating element.

According to an embodiment of the child carrier, the wheel tilt adjustment device is configured to move the counter-element along the fork. The wheel tilt adjustment device may thus set the relative position of the counter-element along the fork. The wheel tilt adjustment device may be configured to restrict or prevent any movement of the counter-element along the fork, in particular after any position adjustment and/or wheel tilt angle adjustment. The wheel tilt adjustment device may fix the counter-element in a set place along the fork. For example, the wheel tilt adjustment device may comprise a screw that moves the counter-element along the fork by turning of the screw. When the screw does not turn, the counter-element is held in place by the screw. The screw may engage the counter-element directly or indirectly. For example, the wheel tilt adjustment device may be configured for manual movement of the counter-element. Alternatively, the wheel tilt adjustment device may comprise an actuator, such as an electric motor, for moving the counter-element along the fork.

According to an embodiment of the child carrier, the wheel tilt attachment device comprises a bearing element, a screw and/or an adjustment nut. The bearing element may hold the counter-element in a floating manner, for example allowing the counter-element to adapt to an orientation of the axle. The bearing element may also prevent the counter-element from falling out of the fork. The screw may engage the bearing element to move the bearing element and thus the counter-element along the fork. The screw and the bearing element may, for example, be fully received in an interior of the fork, for example formed by the second shaft. The bearing element may be slidably attached to the fork. The counter-element may be floatingly received by the bearing element. The bearing element may have a receiving space for the counter-element. For example, the counter-element may be tiltable within a receptacle of the bearing element around at least one axis of rotation. The bearing element may be configured to prevent any movement of the counter-element along the fork without corresponding bearing element movement. The screw may engage the bearing element. For example, the bearing element may have a slot in which a head of the screw is received. The adjustment nut may be engaged to the screw. For example, the adjustment nut may be received in the fork, in particular its second shaft. Turning the adjustment nut may move the screw along the fork and thus move the bearing element and therefore also the counter-element. The adjustment nut may have a ribbed exterior circumference for easy turning by hand. The adjustment nut may have a thread, in particular an internal thread, for engaging a corresponding thread of the screw. The counter-element may form the second closed dropout, optionally together with the rest of the tilt attachment device, such as with the screw, the bearing element and the adjustment nut. Additionally, the second shaft may also form part of the second closed dropout The fork shaft receiving the counter-element may have an open end for inserting the counter-element and/or some or all components of the wheel tilt adjustment device. The components of the wheel tilt adjustment device may interlock in such a way that they cannot fall out when mounted to the second shaft of the fork.

According to an embodiment of the child carrier, the adjustment nut protrudes from the fork for manual adjustment of the wheel tilt angle. For example, a section of a circumference of the adjustment nut may protrude through a through hole in the second shaft of the fork. The rest of the adjustment nut may be received within the fork. The adjustment nut may protrude from a wheel facing side of the fork and/or a side facing towards the first shaft of the fork. A risk of unintentional adjustment of the tilt adjustment device, for example by bumping with the exposed section of the adjustment nut into an obstacle, may thus be low. Nevertheless, the adjustment nut may easily be accessible. Alternatively or additionally, the wheel tilt adjustment device may comprise a locking device, for example comprising a locking slider engageable to the adjustment nut for blocking its rotational movement, which prevents adjustment in a locked state.

According to an embodiment of the child carrier, the counter-element has a convex surface. For example, a middle section of the convex surface may protrude more outward than a rim section of the convex surface. The convex surface may allow support of the counter-element and a smooth tilting motion to alignment the counter-element with the axle, in particular an axle receiving hole of the counter-element. For example, the convex surface may be configured as a dome-shaped surface. Alternatively or additionally, the convex surface may be arranged on a side opposite the front wheel and/or opposite the first shaft of the fork and/or opposite of most of the axle. Alternatively or additionally, the convex surface may be resting on an interior side of the fork and/or the bearing element. The convex surface may support the counter-element during mounting of the axle against the insertion forces of the axle, for example by abutting an interior wall of the second shaft of the fork.

According to an embodiment of the child carrier, a diameter of a through hole of at least one of the dropouts is substantially larger than a diameter of the axle. For example, all dropouts may have a through hole with a diameter substantially larger than a diameter of the axle, in particular of a section of the axle supporting the front wheel. The axle may have other sections with a larger diameter, such as a handle section. However, any section of the axle configured for insertion in the dropouts and/or for remaining in the through hole of the dropout with the substantially larger diameter may have a substantially smaller diameter than the through hole of one or both dropouts. The axial axis of the axle may thus be tilted relatively to an axial axis of the respective through hole, for example of the first dropout. The first dropout may thus be rigid and non-floating but still allow tilting of the axle for tilt adjustment of the front wheel. For example, the diameter of the through hole of the at least one of the dropouts larger than a diameter of the axle by at least 0,3 mm, 0,5 mm or even 1,0 mm.

According to an embodiment of the child carrier, the second end of the axle comprises a threaded section and a non-threaded tip-section. The threaded section may be arranged at a first end facing side of the tip section. During insertion, the tip section may thus enter any hole of the fork before the threaded section. The tip section may enter the second dropout and/or the counter-element first during mounting of the axle. The tip section may thus align the second dropout and/or the counter-element with the axial axis of the axle during insertion. If such an alignment is caused by a threaded section, said threads can easily get damaged. The tip section thus prevents the threads of the axle from being damaged. After the threaded section, the axle may comprise another section. This section may be configured as the wheel supporting section. The wheel may rest on the wheel supporting section at least in certain situations when mounted to the child carrier. The wheel supporting section may have a smooth outer surface and may be free of threads.

The first end of the axle may also be free of any thread engaging any of the dropouts or even be completely free of threads.

According to an embodiment of the child carrier, the tip section has an axial length of at least 0,5 mm, more in particular of at least 1 mm, even more in particular of at least 2 mm or even at least 3 mm. Such a length has been shown to be a reliable protection against damage of the threads of the axle during mounting of the axle to the fork. For example, such a length of the non-threaded tip section allows to compensate tilt of counter-element without damaging threads during axle mounting. The tip section may have a smaller diameter than the threaded section, for example to prevent an interior thread in the second dropout from potentially being damaged. The tip section may form an axially outer part of the first end of the axle.

According to an embodiment of the child carrier, the first end of the axle comprises a lever configured for clamping the axle to the dropouts. For example, the axle is thus not only tightened by being threadedly attached. This may allow tilt adjustment without completely detaching the axle from the second dropout. For example, the lever may form part of a quick release lever. The axle may comprise a camming action for the lever. The lever may clamp the fork shaft to the axle. The clamping may provide a less rigid connection that facilitates wheel tilt adjustment.

According to an embodiment of the child carrier, the child carrier comprises a front wheel mounted to the fork with the axle. For example, the axle extends through a hub of the front wheel. The hub may comprise a through hole configured for receiving the axle, in particular the wheel supporting section of the axle. The hub may comprise one or more roller bearings that rotatably support the wheel on the axle. The hub may comprise an inner ring and an outer ring. The front wheel may comprise a rim attached to the hub, for example by spokes and/or to the outer ring. The front wheel may comprise a tire that may be attached to the rim. The tire may be filled with air. The front wheel may be tubeless or comprise a tube to retain the air. The tire may also be configured as a solid rubber tire.

Other features of the present invention will be apparent from consideration of the information contained above as well as in or in combination with the following detailed description, drawings, and claims. The present invention is illustrated by way of example, and not by way of limitation, in the figures of the accompanying drawings.

### BRIEF DESCRIPTION OF FIGURES

- Fig. 1: shows, in a schematic perspective view, a child carrier.
- Fig. 2: shows, in a schematic perspective view, a front section of the child carrier according to Fig. 1.
- Fig. 3: shows, in a schematic perspective view, a front wheel attachment device of the child carrier according to Fig. 1.
- Fig. 4: illustrates, in a sectional view along a shaft of a fork of the front wheel attachment device, the front wheel attachment and a wheel tilt adjustment device of the front wheel attachment device.
- Fig. 5: shows, in schematic perspective view, parts and details of the wheel tilt adjustment device.
- Fig. 6: shows, in a schematic perspective view, a bearing element, a screw, an adjustment nut of the wheel tilt adjustment device and a counter-element for attaching a front axle to the fork.
- Fig. 7: shows, in a schematic perspective view, the bearing element.
- Fig. 8: illustrates, in a schematic perspective exploded view, components of the wheel tilt adjustment device.
- Fig. 9: illustrates, in another schematic perspective exploded view, components of the wheel tilt adjustment device.
- Fig. 10: shows, in a schematic side view, the axle that attaches the front wheel to the fork.

### DETAILED DESCRIPTION OF EMBODIMENTS

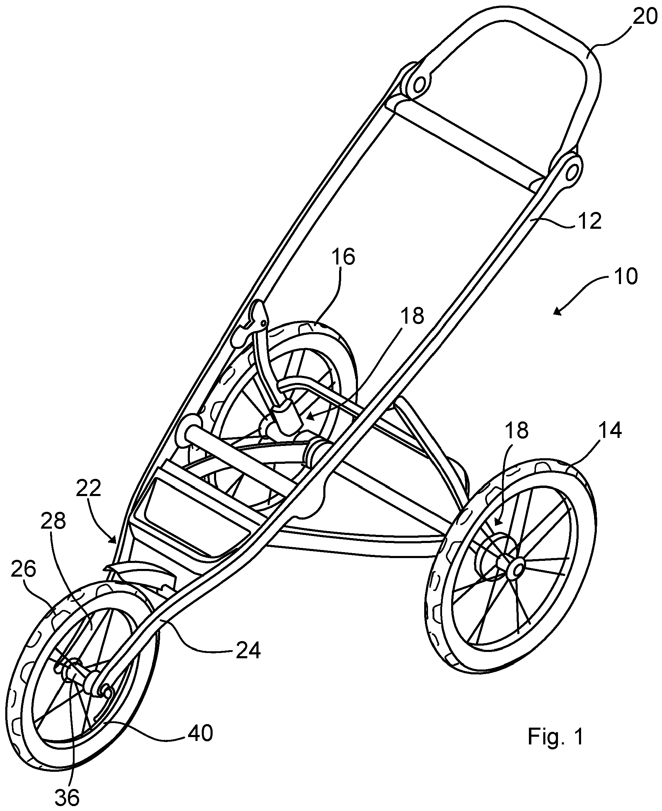

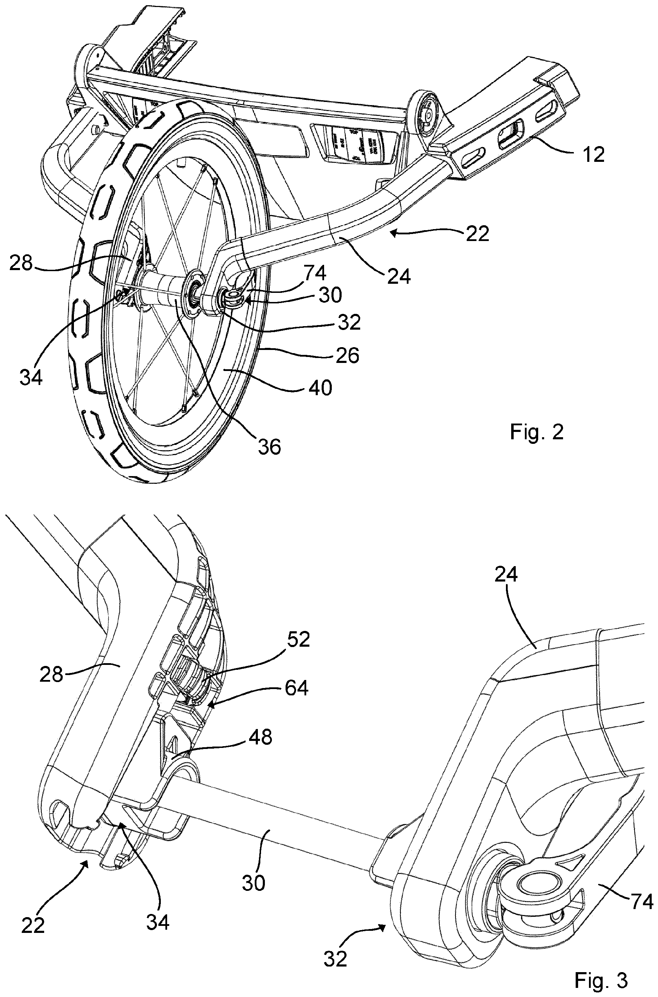

Fig. 1 shows a child carrier 10. The child carrier 10 comprises a frame 12. At a lower back side, a left back wheel 14 and a right back wheel 16 are rotatably attached to the frame 12. At an upper back end, a handle 20 for pushing the child carrier 10, for example when strolling or jogging, is attached to the frame 12. The child carrier 10 also comprises a suspension 18. At the front, the frame 12 forms a fork 22. The fork 22 is shown in greater detail in Fig. 2 and Fig. 3. The fork 22 comprises a first shaft 24, which is arranged on the left side of a front wheel 26. The fork 22 further comprises a second shaft 28, which is arranged on the right side of the front wheel 26. The front wheel 26 is rotatably and removably attached to the fork 22 between the first shaft 24 and the second shaft 28. For example, the front wheel 26 can be removed to attach the child carrier 10 to a bicycle. The child carrier 10 further comprises a child seat and/or infant basket, which is attached to the middle of the frame 12 and not shown in Fig. 1. The child seat and/or infant basket may be removably attached to carry a child or infant independently of the child carrier 10 and to reconfigure the child carrier 10 when the child gets older. Further, the frame 12 and/or the child carrier 10 may be collapsible, for example for storage and transport in a vehicle. For that purpose, the front wheel 26 may also be removed.

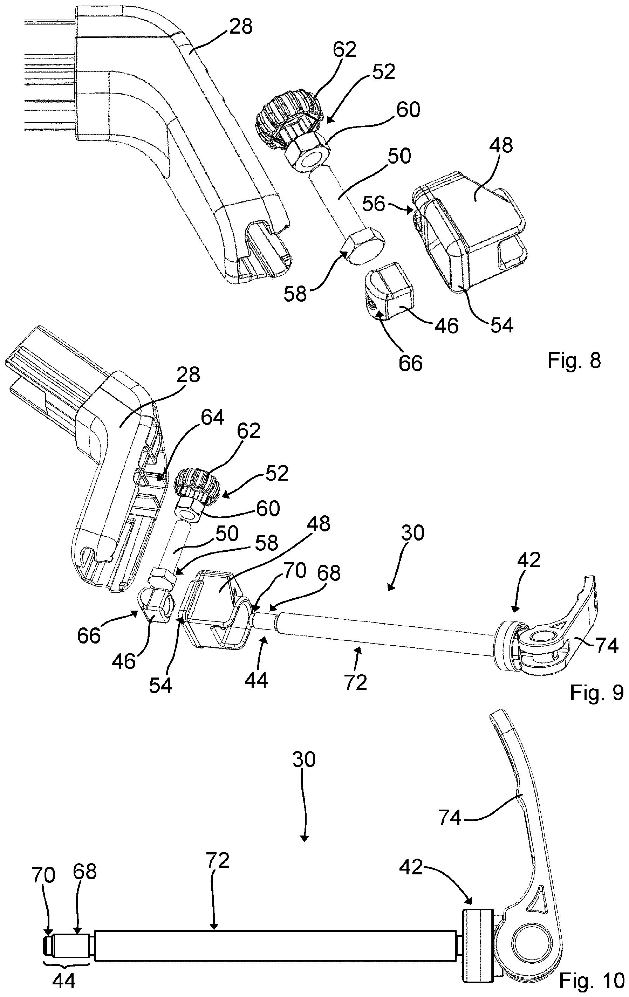

For the removable attachment of the front wheel 26 to the frame 12, the child carrier 10 comprises a front wheel attachment device. The front wheel attachment device comprises the fork 22 and an axle 30, which is shown in greater detail in Fig. 10. As can best be seen in Fig. 3, the fork 22 has closed dropouts 32, 34. A first closed dropout 32 is formed in the first shaft 24 of the fork 22. A second closed dropout 34 is formed in the second shaft 28 of the fork 22. For attachment of the front wheel 26, the front wheel 26 is arranged between the two dropouts 32, 34 and the axle 30 is inserted first through the first dropout 32, then a hub 36 of the front wheel 26 and then the second dropout 34 in an axial direction. The hub 36 comprises a pair of roller bearings 38 to allow smooth rotation of the front wheel 26 around the axle 30. The hub 36 is connected to a rim 40 of the front wheel 26 by spokes. A rubber tire of the front wheel 26 is attached to the rim 40.

The closed dropouts 32, 34 may prevent front wheel loss even if the axle 30 loses its tension or has not been properly tensioned. The first closed dropout 32 is formed by a through hole in the first shaft 24. The second closed dropout 34 is formed by components of a wheel tilt adjustment device of the front wheel attachment device. The wheel tilt adjustment device is configured for adjusting a tilt angle of the front wheel 26 relative to the fork 22 to allow manual adjustment of the track of the child carrier 10. A user may thus ensure that the child carrier 10 is rolling straight in the absence of steering forces or other external forces that cause the child carrier 10 to turn. Details of the wheel tilt adjustment device will be further discussed below.

When attached to the fork 22, a first end 42 of the axle 30 is extending through the first dropout 32. A second end 44 of the axle 30 is extending through the second dropout 34. The second end 44 is threaded into a counter-element 46 to retain the axle 30 in the second dropout 34 and to form a thrust bearing for tensioning the axle 30. The second end 44 of the axle 30 is thus attached to the fork 22 with the counter-element 46. The counter-element 46 is formed as a nut with an internal thread corresponding to a thread on the second end 44 of the axle 30. The counter-element 46 is arranged fully within the second shaft 28 of the fork 22.

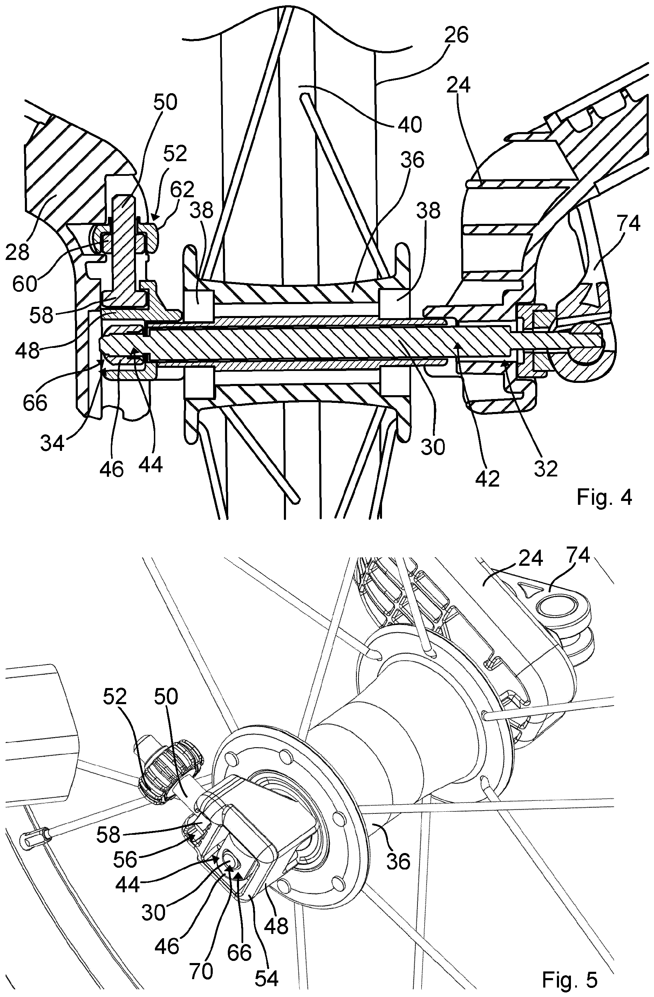

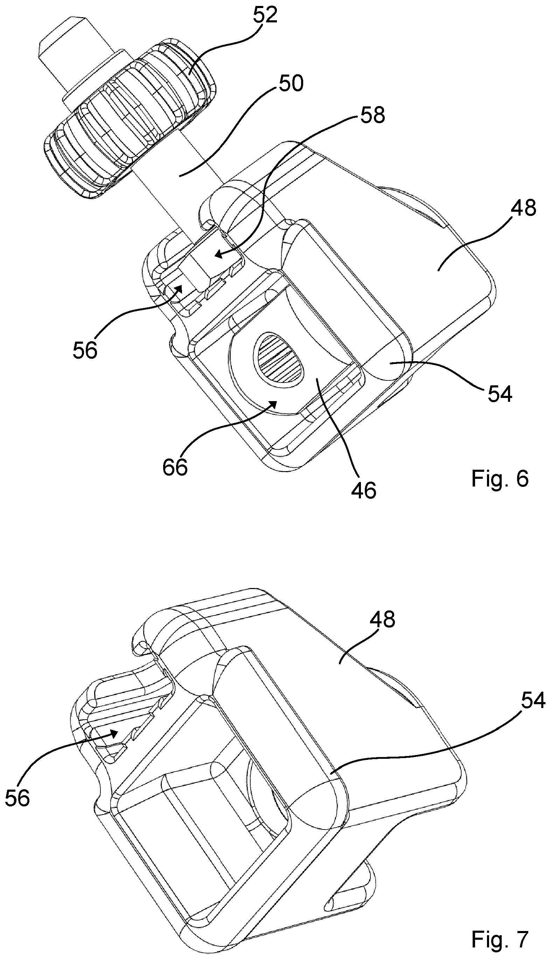

The wheel tilt adjustment device is configured to move the counter-element 46 along the second shaft 28 of the fork 22. For that purpose, the wheel tilt attachment device comprises a bearing element 48, a screw 50 and an adjustment nut 52. These components can be seen in Fig. 5 to Fig. 9. The bearing element 48 has a receptacle for floatingly receiving the counter-element 46. The bearing element 48 is slidably attached to the second shaft 28 of the fork 22. For that purpose, the bearing element 48 has a protruding ledge 54 that is received in a guide rail structure of the second shaft 28 of the fork 22. The screw 50 engages the bearing element 48. For that purpose, the bearing element 48 has a slot 56. In the slot 56, a head 58 of the screw 50 is received. The slot 56 only permits insertion of the bearing element 48 in a sideways direction as compared to the movement axis of the bearing element 48 in the second shaft 28 of the fork 22. Once the bearing element 48 with the engaged screw 50 is inserted into the second shaft 28 from the bottom through an opening, the screw 50 can thus not be disengaged from the bearing element 48 anymore while the bearing element 48 is received in the second shaft 28 of the fork 22. The adjustment nut 52 engages a thread of the screw 50 with an internal thread. The adjustment nut 52 comprises an internal nut element 60 with the internal thread and an external handling piece 62 that forms a ribbed outer circumference for turning the adjustment nut 52 and that positively interlocks with the nut element 60. This can be seen in Figs. 8 and 9.

The adjustment nut 52 is received in a slot 64 of a hollow profile member of the second shaft 28 of the fork 22. For mounting the wheel tilt adjustment device, the counter-element 46 is inserted into the bearing element 48 and the screw 50 is inserted with its head 58 into the bearing element 48 as well. The adjustment nut 52 is inserted into the slot 64 of the second shaft 28 of the fork 22. An optional cover element of the second shaft 28 may be attached on a wheel facing side of the so that the adjustment nut 52 is retained in the slot 64 even when not engaged to the screw 50. The cover element may comprise a through hole through which the adjustment nut 52 protrudes. The adjustment nut 52 protrudes from the fork 22 for manual adjustment of the wheel tilt angle on a side of the second shaft 28 that faces towards the front wheel 26. The bearing element 48 with the counter-element 46 and the screw 50 is then inserted from the bottom into an interior of the second shaft 48, wherein the interior forms a guide for the bearing element 48. Once the screw 50 abuts the adjustment nut 52, the adjustment nut 52 is turned to engage the screw 50. Once fully engaged, the bearing element 48 is secured within the second shaft 28 and the second closed dropout 34 is formed. For additional loss prevention, the bottom of the second shaft 28 may be closed by a closure element, such as by a plug screwed into place. That closure element may also be configured to prevent disengaging the screw 50 from the adjustment nut 52, for example by limiting the range of motion of the bearing element 48 towards the bottom end of the second shaft 28.

As can best be taken from Fig. 4, turning the adjustment nut 52 will move the screw 50 and thus the engaged bearing element 48 along the bottom straight section of the second shaft 28. Consequently, the counter-element 46 and thus the second closed dropout 34 is adjusted in their position along the second shaft 28 as well. The wheel tilt adjustment device will thus adjust an alignment of the axle 30 relative to the fork 22. This causes an adjustment of the tilt angle of the front wheel 26 around a forward-backward axis of the child carrier 10. By turning the adjustment nut 52, a user may tilt the front wheel 26 to the left or to the right, depending on turning direction.

To compensate for an alignment of the axle 30, the axle 30 is floatingly received in the fork 22. An inner diameter of the first dropout 32 is larger than an outer diameter of the second end 44 of the axle 30 by 0,5 mm or even 1,0 mm. This allows a tilt of the axial axis of the axle 30 relative to a central axis of the first dropout 32 without damaging any part and/or undue tension. The front wheel 26 is resting with an inner ring of the hub 36 on an upper half ring of the first dropout 32 forming an abutment for the hub 36. The axle 30 thus only prevents the front wheel 26 from falling out of the fork 22 while the hub 36 is resting on the fork 22 and not on the axle 30 when the child carrier 10 is rolling on the ground.

Similarly, both the second end 44 and the counter-element 46 are floatingly received within the second shaft 28 of the fork 22. The front wheel 26 is also resting with the inner ring of the hub 36 on an upper half ring of the second dropout 34 forming an abutment for the hub 36. The upper half ring at the second dropout 34 is formed by the bearing element 48. An outer diameter of the counter-element 46 is smaller than an inner diameter of the receptacle of the bearing element 48 by 0,5mm or even 1,0 mm. Further, the counter-element 46 has a convex surface 66 at a side facing away from the front wheel 26 and potentially resting on the interior of the second shaft 28 when the axle 30 is inserted into the second closed dropout 34. The convex surface 66 can be seen, for example, in Fig. 8. The convex surface 66 is dome shaped with a single curvature that corresponds to a possible tilt of the counter-element 46 during axle 30 insertion. For example, when the position of the bearing element 48 and thus the counter-element 46 has been adjusted along the second shaft 28 with the axle 30 detached, the threaded hole for receiving the second end 44 of the axle 30 may not be aligned with the axial axis of the axle 30. The convex surface 66 allows the counter-element 46 to be tilted easily into alignment when the axle 30 is inserted even when abutting the second shaft 28 due to being pushed by the axle 30. The axle 30 can thus be easily screwed into the counter-element 46 without damaging any threads. The side of the counter-element 46 opposite the front wheel 26 and comprising the convex surface 66 is also flared outward, as can again be seen in Fig. 8. Said flaring corresponds to a flaring of the receptacle of the bearing element 48. The corresponding flares guide the counter-element 46 in the bearing element 48 and prevent tilting of the counter-element 46 relative to the bearing element 48 in a direction not corresponding to wheel tilt angle adjustment. Despite the counter-element 46 being floatingly received in the bearing element 48, the counter-element 46 is already generally facing with its internally threaded hole towards the axis 30.

Further, the second end 44 of the axle 30 comprises a threaded section 68 and a non-threaded tip section 70, as can best be seen in Fig. 10. The threaded section 68 is arranged at a first end 42 facing side of the tip section 70. The non-threaded tip section 70 thus engages the counter-element 46 first during axle 30 insertion. The tip section 70 may thus tilt the counter-element 46 in alignment with the axle 30 before contact of the threads to each other. In the shown example, the tip section 70 has an axial length of about 1,0 mm, 2,0 mm or 3,0 mm. Further, a diameter of the tip section 70 is smaller than the threaded section 68, for example by 1,0 mm.

Between the first end 42 and the second end 44, the axle 30 comprises a wheel supporting section 72. The wheel supporting section 72 has a larger diameter than the second end 44. The first end 42 of the axle 30 comprises a lever 74 configured for clamping the axle 30 to the dropouts 32, 34. In the shown example, the lever 74 has a camming action that tensions the axle 30 and thus the two shafts 24, 28 of the fork 22 against the front wheel 26. When opening the lever 74, the front wheel 26 attachment is not tensioned anymore, and the wheel tilt may easily be adjusted with the wheel tilt adjustment device without the need to detach the front wheel 26 or the axle 30.

## Claims

1. Child carrier (10) comprising a front wheel attachment device,
the front wheel attachment device comprising a fork (22) with closed dropouts (32, 34) and an axle (30) configured for attaching a front wheel (26) to the fork (22),
**characterized in that** the front wheel attachment device further comprises a wheel tilt adjustment device configured for adjusting a tilt angle of the front wheel (26) relative to the fork (22).

2. Child carrier (10) according to claim 1,
The wheel tilt adjustment device is configured for adjusting the tilt angle of the front wheel (26) around a forward-backward axis of the child carrier (10) and/or by adjusting an alignment of the axle (30) relative to the fork (22).

3. Child carrier (10) according to claim 1 or 2,
wherein a first end (42) of the axle (30) is extending through a first of the dropouts (32) and
wherein a second end (44) of the axle (30) is attached to the fork (22) with a counter-element (46),
in particular with the counter-element (46) being configured as a nut and/or with the second end (44) of the axle (30) being threadedly attached to the counter-element (46).

4. Child carrier (10) according to claim 3,
wherein the counter-element (46) is at least partially arranged within the fork (22) or
wherein the counter-element (46) is arranged on an exterior side of the fork (22).

5. Child carrier (10) according to claims 3 or 4,
wherein the wheel tilt adjustment device is configured to allow movement of the counter-element (46) along the fork (22).

6. Child carrier (10) according to any one of claims 3 to 5,
wherein the wheel tilt adjustment device is configured to move the counter-element (46) along the fork (22).

7. Child carrier (10) according to claim 6,
wherein the wheel tilt attachment device comprises a bearing element (48), a screw (50) and an adjustment nut (52),
wherein the bearing element (48) is slidably attached to the fork (22),
wherein the counter-element (46) is floatingly received by the bearing element (48),
wherein the screw (50) engages the bearing element (48), and
wherein the adjustment nut (52) engages the screw (50).

8. Child carrier (10) according to claim 7,
wherein the adjustment nut (52) protrudes from the fork (22) for manual adjustment of the wheel tilt angle,
in particular from a wheel facing side of the fork (22).

9. Child carrier (10) according to any one of the preceding claims 3 to 8,
wherein the counter-element (46) has a convex surface (66),
in particular
with the convex surface (66) being configured as a dome-shaped surface
and/or
with the convex surface (66) being arranged on a side opposite the front wheel (26)
and/or
with the convex surface (66) resting on an interior side of the fork (22) and/or the bearing element (48).

10. Child carrier (10) according to any one of the preceding claims,
wherein a diameter of a through hole of at least one of the dropouts (32, 34) is substantially larger than a diameter of the axle (30),
such as at least 0,3 mm larger, in particular at least 0,5 mm larger, or even at least 1,0 mm larger.

11. Child carrier (10) according to any one of the preceding claims,
wherein the second end (44) of the axle (30) comprises a threaded section (68) and a non-threaded tip-section (70),
wherein the threaded section (68) is arranged at a first end (42) facing side of the tip section (70).

12. Child carrier (10) according to claim 11,
wherein the tip section (70) has an axial length of at least 0,5 mm, more in particular of at least 1 mm, even more in particular of at least 2 mm or even at least 3 mm.

13. Child carrier (10) according to any one of the preceding claims,
wherein the first end (42) of the axle (30) comprises a lever (74) configured for clamping the axle (30) to the dropouts (32, 34).

14. Child carrier (10) to any one of the previous claims,
wherein the child carrier (10) comprises a front wheel (26) mounted to the fork (22) with the axle (30).

## Patentansprüche

1. Kindertransporter (10), umfassend eine Vorderradbefestigungsvorrichtung,
die Vorderradbefestigungsvorrichtung umfassend eine Gabel (22) mit geschlossenen Ausfallenden (32, 34) und eine Achse (30), die zum Befestigen eines Vorderrads (26) an der Gabel (22) konfiguriert ist, **dadurch gekennzeichnet, dass** die Vorderradbefestigungsvorrichtung ferner eine Radneigungseinstellvorrichtung, die zum Einstellen eines Neigungswinkels des Vorderrads (26) relativ zu der Gabel (22) konfiguriert ist, umfasst.

2. Kindertransporter (10) nach Anspruch 1,
wobei die Radneigungseinstellvorrichtung zum Einstellen des Neigungswinkels des Vorderrads (26) um eine Vorwärts-Rückwärts-Achse des Kindertransporters (10) herum und/oder durch Einstellen einer Ausrichtung der Achse (30) relativ zu der Gabel (22) konfiguriert ist.

3. Kindertransporter (10) nach Anspruch 1 oder 2,
wobei sich ein erstes Ende (42) der Achse (30) durch ein erstes der Ausfallenden (32) hindurch erstreckt und
wobei ein zweites Ende (44) der Achse (30) mit einem Gegenelement (46) an der Gabel (22) befestigt ist,
speziell, wobei das Gegenelement (46) als eine Mutter konfiguriert ist und/oder wobei das zweite Ende (44) der Achse (30) an dem Gegenelement (46) mit Gewinde befestigt ist.

4. Kindertransporter (10) nach Anspruch 3,
wobei das Gegenelement (46) mindestens teilweise innerhalb der Gabel (22) angeordnet ist oder
wobei das Gegenelement (46) an einer Außenseite der Gabel (22) angeordnet ist.

5. Kindertransporter (10) nach Anspruch 3 oder 4,
wobei die Radneigungseinstellvorrichtung konfiguriert ist, um eine Bewegung des Gegenelements (46) entlang der Gabel (22) zu ermöglichen.

6. Kindertransporter (10) nach einem der Ansprüche 3 bis 5,
wobei die Radneigungseinstellvorrichtung konfiguriert ist, um das Gegenelement (46) entlang der Gabel (22) zu bewegen.

7. Kindertransporter (10) nach Anspruch 6,
wobei die Radneigungsbefestigungsvorrichtung ein Lagerelement (48), eine Schraube (50) und eine Einstellmutter (52) umfasst,
wobei das Lagerelement (48) an der Gabel (22) verschiebbar befestigt ist,
wobei das Gegenelement (46) durch das Lagerelement (48) schwimmend aufgenommen ist,
wobei die Schraube (50) das Lagerelement (48) in Eingriff nimmt und
wobei die Einstellmutter (52) die Schraube (50) in Eingriff nimmt.

8. Kindertransporter (10) nach Anspruch 7,
wobei die Einstellmutter (52) für eine manuelle Einstellung des Radneigungswinkels aus der Gabel (22) herausragt,
speziell aus einer dem Rad zugewandten Seite der Gabel (22).

9. Kindertransporter (10) nach einem der vorstehenden Ansprüche 3 bis 8, wobei das Gegenelement (46) eine konvexe Oberfläche (66) aufweist, speziell,
wobei die konvexe Oberfläche (66) als eine kuppelförmige Oberfläche konfiguriert ist und/oder
wobei die konvexe Oberfläche (66) auf einer dem Vorderrad (26) gegenüberliegenden Seite angeordnet ist
und/oder
wobei die konvexe Oberfläche (66) auf einer Innenseite der Gabel (22) und/oder des Lagerelements (48) aufliegt.

10. Kindertransporter (10) nach einem der vorstehenden Ansprüche,
wobei ein Durchmesser eines Durchgangslochs von mindestens einem der Ausfallenden (32, 34) wesentlich größer als ein Durchmesser der Achse (30) ist,
wie mindestens 0,3 mm größer, speziell mindestens 0,5 mm größer oder sogar mindestens 1,0 mm größer.

11. Kindertransporter (10) nach einem der vorstehenden Ansprüche,
wobei das zweite Ende (44) der Achse (30) einen Gewindeabschnitt (68) und einen gewindelosen Spitzenabschnitt (70) umfasst,
wobei der Gewindeabschnitt (68) an einer dem ersten Ende (42) zugewandten Seite des Spitzenabschnitts (70) angeordnet ist.

12. Kindertransporter (10) nach Anspruch 11,
wobei der Spitzenabschnitt (70) eine axiale Länge von mindestens 0,5 mm, spezieller von mindestens 1 mm, noch spezieller von mindestens 2 mm oder sogar mindestens 3 mm aufweist.

13. Kindertransporter (10) nach einem der vorstehenden Ansprüche,
wobei das erste Ende (42) der Achse (30) einen Hebel (74) umfasst, der zum Festklemmen der Achse (30) an den Ausfallenden (32, 34) konfiguriert ist.

14. Kindertransporter (10) nach einem der vorstehenden Ansprüche,
wobei der Kindertransporter (10) ein Vorderrad (26) umfasst, das mit der Achse (30) an der Gabel (22) montiert ist.

## Revendications

1. Porte-bébé (10) comprenant un dispositif de fixation de roue avant,
le dispositif de fixation de roue avant comprenant une fourche (22) avec des pattes fermées (32, 34) et un essieu (30) conçu pour fixer une roue avant (26) à la fourche (22), **caractérisé en ce que** le dispositif de fixation de roue avant comprend en outre un dispositif d'ajustement d'inclinaison de roue conçu pour ajuster un angle d'inclinaison de la roue avant (26) par rapport à la fourche (22).

2. Porte-bébé (10) selon la revendication 1,
le dispositif d'ajustement d'inclinaison de roue est conçu pour ajuster l'angle d'inclinaison de la roue avant (26) autour d'un axe avant-arrière du porte-bébé (10) et/ou en ajustant un alignement de l'essieu (30) par rapport à la fourche (22).

3. Porte-bébé (10) selon la revendication 1 ou 2,
dans lequel une première extrémité (42) de l'essieu (30) s'étend à travers une première des pattes (32) et
dans lequel une seconde extrémité (44) de l'essieu (30) est fixée à la fourche (22) par un contre-élément (46),
en particulier avec le contre-élément (46) conçu comme un écrou et/ou avec la seconde extrémité (44) de l'essieu (30) fixée de manière filetée au contre-élément (46).

4. Porte-bébé (10) selon la revendication 3,
dans lequel le contre-élément (46) est au moins partiellement agencé à l'intérieur de la fourche (22) ou
dans lequel le contre-élément (46) est agencé sur un côté extérieur de la fourche (22).

5. Porte-bébé (10) selon la revendication 3 ou 4,
dans lequel le dispositif d'ajustement d'inclinaison de roue est conçu pour permettre un déplacement du contre-élément (46) le long de la fourche (22).

6. Porte-bébé (10) selon l'une quelconque des revendications 3 à 5,
dans lequel le dispositif d'ajustement d'inclinaison de roue est conçu pour déplacer le contre-élément (46) le long de la fourche (22).

7. Porte-bébé (10) selon la revendication 6,
dans lequel le dispositif de fixation d'inclinaison de roue comprend un élément porteur (48), une vis (50) et un écrou d'ajustement (52),
dans lequel l'élément porteur (48) est fixé de manière coulissante à la fourche (22),
dans lequel le contre-élément (46) est reçu de manière flottante par l'élément porteur (48),
dans lequel la vis (50) vient en prise avec l'élément porteur (48), et
dans lequel l'écrou d'ajustement (52) vient en prise avec la vis (50).

8. Porte-bébé (10) selon la revendication 7,
dans lequel l'écrou d'ajustement (52) fait saillie de la fourche (22) pour un ajustement manuel de l'angle d'inclinaison de roue,
en particulier à partir d'un côté de la fourche (22) faisant face à la roue.

9. Porte-bébé (10) selon l'une quelconque des revendications précédentes 3 à 8, dans lequel le contre-élément (46) a une surface convexe (66), notamment
avec la surface convexe (66) étant conçue en tant que surface en forme de dôme et/ou
avec la surface convexe (66) étant agencée sur un côté opposé à la roue avant (26)
et/ou
avec la surface convexe (66) reposant sur un côté intérieur de la fourche (22) et/ou de l'élément porteur (48).

10. Porte-bébé (10) selon l'une quelconque des revendications précédentes,
dans lequel un diamètre d'un trou traversant d'au moins l'une parmi les pattes (32, 34) est sensiblement plus grand qu'un diamètre de l'essieu (30),
par exemple au moins 0,3 mm plus grand, en particulier au moins 0,5 mm plus grand, ou même au moins 1,0 mm plus grand.

11. Porte-bébé (10) selon l'une quelconque des revendications précédentes,
dans lequel la seconde extrémité (44) de l'essieu (30) comprend une section filetée (68) et une section de pointe non filetée (70),
dans lequel la section filetée (68) est agencée au niveau d'une première extrémité (42) faisant face à la section de pointe (70).

12. Porte-bébé (10) selon la revendication 11,
dans lequel la section de pointe (70) a une longueur axiale d'au moins 0,5 mm, plus particulièrement d'au moins 1 mm, plus particulièrement encore d'au moins 2 mm ou même d'au moins 3 mm.

13. Porte-bébé (10) selon l'une quelconque des revendications précédentes,
dans lequel la première extrémité (42) de l'essieu (30) comprend un levier (74) conçu pour serrer l'essieu (30) aux pattes (32, 34).

14. Porte-bébé (10) selon l'une quelconque des revendications précédentes,
dans lequel le porte-bébé (10) comprend une roue avant (26) montée sur la fourche (22) avec l'essieu (30).
